# EUROPÄISCHE PATENTSCHRIFT

(11) **EP 3 602 274 B1**
(45) Veröffentlichungstag und Bekanntmachung des Hinweises auf die Patenterteilung: **12.04.2023**
(21) Anmeldenummer: 18721757.5
(22) Anmeldetag: 30.04.2018
(51) Int. Cl.: G06F 8/65, G06F 9/4401, H04W 8/20, H04W 84/22

(54) **FIRMWARE-UPDATE-OVER-THE AIR (FOTA) IN DER GEBÄUDETECHNIK**
FIRMWARE OVER-THE-AIR (FOTA) UPDATE FOR BUILDING SERVICES
MISE À JOUR PAR RADIO D'UN MICROLOGICIEL (FOTA) DANS LES ÉQUIPEMENTS TECHNIQUES DU BÂTIMENT

(30) Priorität: 10.05.2017 DE 102017207871
(43) Veröffentlichungstag der Anmeldung: 05.02.2020
(73) Patentinhaber: Tridonic GmbH & Co KG, 6851 Dornbirn (AT)
(72) Erfinder: TOMASINI, Martin, 6850 Dornbirn (AT); BORSOI, Giulio, 6850 Dornbirn (AT)
(74) Vertreter: Rupp, Christian
(86) Internationale Anmeldenummer: PCT/EP2018/061030
(87) Internationale Veröffentlichungsnummer: WO 2018/206337

(56) Entgegenhaltungen:
- WO-A1-2007/055686
- CA-A1- 2 970 362
- DE-A1-102014 012 257
- US-A1- 2016 055 068

## Beschreibung

Die Erfindung bezieht sich auf das Gebiet des sog. Firmware-Update-Over-The Air (FOTA), und genauer gesagt auf die Verwendung dieses Ansatzes im Bereich von Gebäudetechnik-, insbesondere Lichttechnik-Installationen.

Firmware-Update-Over-The Air (FOTA) ist als solches bekannt, und sind in https: / / de.wikipedia.org/wiki/Firmware_Over-the-Air wie folgt definiert:
*"Firmware Over-the-Air (FOTA) ist eine Methode, um neue Systemsoftware (Firmware) auf mobile Endgeräte über eine Funkschnittstelle aufzuspielen (beispielsweise über WLAN oder Mobilfunknetz.... Nach dem Aufruf einer zum Beispiel "Updatedienst" genannten Funktion wird die neue Firmware über die Luftschnittstelle übertragen und anschließend installiert"*
FOTA ist Gegenstand bspw. der Dokumente US 6,785,707, US 6,832,373, US 6,941,453, US 6,978,453, US 6,996,818, US 7,047,448 und US 7,082,5.

Darüber hinaus beschreibt Dokument DE 10 2014 012257 A1 die Bereitstellung eines Aktualisierungspakets für einen Knoten in einem Mesh-Netzwerk durch einen Aktualisierungsserver. Die Nachrichtenweitergabe erfolgt durch Speichern und Weiterleiten.

Dokument WO 2007/055686 offenbart ein Over-the-Air-Downloadverfahren in drahtlosen Ad-hoc- oder Mesh-Netzen. Ein Kommissionier-Gerät (=Managementserver) koordiniert die Zuordnung von Client- und Serverrollen der drahtlosen Geräte. Explizite Download-/Aktualisierungsanweisungen durch das Kommissionier-Gerät zur Steuerung des Verfahrens sind vorgesehen.

Firmware-Update-Over-The Air (FOTA) im Bereich von Gebäudetechnik-, insbesondere Lichttechnik-Installationen, hat die Besonderheit, dass eine ganze Installation in Sachen Firmware ein Update bekommen soll, und gleichzeitig die Abwärts-Kompatibilität unterbrochen werden könnte.

Die Erfindung bezieht sich insbesondere auf sog. vermaschte Netze ("Mesh"), die in https://de.wikipedia.org/wiki/Vermaschtes_Netz wie folgt definiert sind:
*"In einem vermaschten Netz (engl. Mesh) ist jeder Netzwerkknoten mit einem oder mehreren anderen verbunden. Die Informationen werden von Knoten zu Knoten weitergereicht, bis sie das Ziel erreichen".*

Die Erfindung schlägt somit einen Ansatz vor, wie ein Firmware-Update-Over-The Air (FOTA) auf die technischen Randbedingungen im Bereich von Gebäudetechnik-, insbesondere Lichttechnik-Installationen, angepasst werden kann.

Diese Aufgabe wird gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung betrifft ein Verfahren zum Firmware-Update-Over-The-Air (FOTA) von Gebäudetechnik-, insbesondere Lichttechnik-Installationen, mit mehreren Geräten, die als vermaschtes Netz mit einem Server verbunden sind.

Das Verfahren weist dabei die folgenden Schritte auf:
- Abspeichern eines von dem Server gesendeten Firmware-Update Images in jeweils einem Speicher eines jeden Geräts,
- Auslösen des Kopierens des Firmware-Updates von dem Speicher in einen internen Speicher eines Mikrocontrollern eines jeden der Geräte durch einen von dem Server ausgegebenen Trigger-Befehl,
wobei der Server innerhalb einer vorbestimmten Zeitdauer *(Timeout)* nach der Ausgabe des Trigger-Befehl anhand von Rückmeldungen der Geräte überprüft, ob jedes Gerät das Firmware-Update Image und den Trigger-Befehl erhalten hat, und wobei das Kopieren erst nach Ablauf der vorbestimmten Zeitdauer erfolgt.

Der Server kann überprüfen, ob alle Geräte innerhalb einer weiteren vorgegeben Zeitdauer mit dem Firmware-Update booten können, indem jedes Gerät sich nach einem Booten mit dem Firmware-Update mit dem Server verbindet.

Ein jedes Gerät, das sich nach dem Firmware-Update mit dem Server verbunden hat, kann auf einen Aktivierungsbefehl von dem Server für die zukünftige Benutzung der Firmware durch einen Boot-Loader des Geräts warten.

Ein Gerät, das keinen Aktivierungsbefehl erhält, kann das Firmware-Update im internen Speicher durch eine Golden Copy der Firmware ersetzen. Der Begriff "Golden Copy" ist im Bereich der Firmware gut bekannt und bezeichnet eine Version der Firmware, deren Kompatibilität und Funktion gesichert sind. Ggf. kann das Firmware-Update zu einem späteren Zeitpunkt zu einer neuen Golden Copy werden, wenn die Kompatibilität und Funktion des Firmware-Updates gesichert sind.

Wenn hinsichtlich zumindest eines Geräts die Überprüfung negativ ausfällt, wird innerhalb der vorbestimmten Zeitdauer (*Timeout*) das Firmware-Update-Over-The-Air durch den Server abgebrochen.

Die Erfindung betrifft auch ein System zum Firmware-Update-Over-The Air von Gebäudetechnik-, insbesondere Lichttechnik-Installationen, aufweisend eine Server und ein Gerät, die jeweils zur Unterstützung eines Verfahrens der oben genannten Art ausgelegt sind. Die Erfindung betrifft weiterhin ein Gebäudetechnik-, insbesondere Lichttechnik-Gerät wie bspw. ein Betriebsgerät für Leuchtmittel, das zur Unterstützung eines Verfahrens nach der oben genannten Art ausgelegt ist.

Weitere Merkmale, Vorteile und Eigenschaften der vorliegenden Erfindung sollen nunmehr anhand der Figur der begleitenden Zeichnungen erläutert werden.

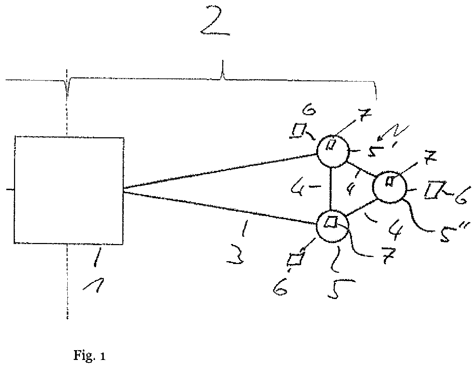

**Die** **Figur 1** zeigt ein Gebäudetechnik-, insbesondere Lichttechnik-Netzwerk in der Form eines Mesh-Netzes, wie es bei der Erfindung Verwendung finden kann.

Die Figur 1 zeigt ganz allgemein ein vermaschtes Netzwerk 2 ("Mesh Network"), das im Wesentlichen aus einem Server 1 sowie Gebäudetechnik-Geräten 5, 5' und 5" besteht. In einem bevorzugten Ausführungsbeispiel sind diese Gebäudetechnik-Geräte Geräte eines Lichttechnik-Netzwerkes, und sind somit typischerweise Aktoren (Betriebsgeräte für Leuchtmittel) und/oder Sensoren (Lichtsensor, Bewegungsmelder, etc.) eines derartigen Lichttechnik-Netzwerkes.

Der Server 1 ist mit den genannten Geräten 5, 5' und 5" über eine drahtlose Verbindung 3 verbunden. Die Geräte sind im Übrigen auch untereinander mittels drahtgebundener, bevorzugt aber mittels drahtloser Kommunikationsstrecken 4 verbunden.

Die Erfindung bezieht sich wie gesagt darauf, wie ein Firmware-Update-Over-The Air (FOTA) für sämtliche oder eine Teil dieser Geräte 5, 5' und 5" durchgeführt werden kann, und zwar ausgehend von dem Server 1.

Der erfindungsgemäße Ablauf ist dabei wie folgt:
1. Ein Firmware-Update Image wird von dem Server 1 über die drahtlose Strecke 3 zu sämtlichen Geräten 5, 5' und 5" übertragen, die ein Firmware-Update benötigen. Die Geräte 5, 5' und 5" speichern dieses Firmware-Update Image in einen "externen" Speicher 6, der jeweils einem Gerät 5, 5' und 5" zugeordnet ist. Unter "externen" Speicher ist dabei zu verstehen, dass dies nicht der eigentliche (Flash-)Speicher eines Mikrocontrollers 7 ist, der in jedem der Geräte 5, 5' und 5" vorgesehen ist, sondern ein zum Mikrocontroller 7 externer Speicher.
2. Es kann dann durch den Server 1 überprüft werden, ob das Firmware-Update Image tatsächlich von allen Geräten 5, 5' und 5" heruntergeladen wurde, die ein Update benötigen. Es kann sein, dass sämtliche Geräte des Netzwerks 2 ein Update benötigen, oder aber auch nur eine Untergruppe davon.
3. Der Server 1 schickt einen Trigger-Befehl raus, der den eigentlichen Firmware-Update Prozess in den Geräten auslöst. Der eigentliche Firmware-Update Prozess besteht darin, dass das Firmware Update Image von dem externen, vorzugsweise Flash-Speicher 6 in den internen Speicher, vorzugsweise Flash-Speicher der Mikroprozessoren 7 der Geräte 5, 5' und 5" kopiert wird.
   Indessen ist vorgesehen, dass dieses eigentliche Firmware-Update, also das Kopieren in den internen Speicher, durch die Geräte nicht unverzüglich nach Erhalt eines Trigger-Befehles ausgeführt wird. Vielmehr überprüft der Server 1, ob von sämtlichen Geräten, die ein Firmware-Update benötigen, innerhalb einer vorgegebenen Zeitdauer, auch Timeout-Zeitdauer genannt, von diesen Geräten eine Bestätigung eingegangen ist, dass einerseits das Firmware Update Image heruntergeladen wurde, aber auch der Trigger-Befehl erhalten wurde. Die Geräte 5, 5', 5" sind dazu ausgebildet, dieses eigentliche Firmware-Update erst nach Ablauf dieser vorgegebenen Zeitdauer auszuführen.
   Durch diese vorgegebene Timeout-Zeitdauer kann somit sichergestellt werden, dass die Geräte5, 5', 5" in der Lage sein werden, innerhalb einer vorgegebenen weiteren Zeitdauer mit dem neuen Firmware-Update zu booten.
   Diese erfindungsgemäße Timeout-Zeitdauer ermöglicht es somit dem Server 1, den Update-Vorgang noch innerhalb dieser Zeitdauer abzubrechen, falls die genannte Überprüfung hinsichtlich der Bestätigung des Downloads (Herunterladens des Firmware-Update Images sowie des Erhalts des Trigger-Befehls hinsichtlich zumindest eines Gerätes einen Fehler zeigt. Andernfalls würde das Risiko bestehen, dass das entsprechende Gerät 5, 5', 5" nach dem misslungenen Firmware-Update nicht mehr mit den anderen Geräten und/oder dem Server kompatibel kommunizieren kann.
4. Falls es innerhalb der vorgegebenen Zeitdauer nicht zu einem Abbruch des Firmware-Update Vorgangs durch den Server 1 gekommen ist, kopieren alle Geräte 5, 5', 5", die ein Firmware-Update benötigen, das Firmware-Update Image von dem externen Speicher in den internen Speicher. Danach booten sie erneut und starten mit dem neuen Firmware-Update Image.
5. Sobald die Geräte mit dem neuen Firmware-Update neu gebootet haben, verbinden sie sich über die drahtlose Schnittstelle 3 mit dem Server 1 und warten auf einen Aktivierungs-Befehl hinsichtlich der zukünftigen Verwendung des Firmware-Updates vom Server 1. Wenn dieser Aktivierungs-Befehl erhalten wird, interpretieren dies die Geräte 5, 5', 5" als eine Bestätigung für die neue Firmware, die somit bei jedem neuen Startvorgang der Geräte 5, 5', 5" durch den sogenannten Bootloader beim Booten verwendet werden wird. Gemäß
   https: / / de.wikipedia.org/wiki/Bootloader
   ist ein Bootloader
   *"auch **Startprogramm**^{[1]} oder **Urlader**^{[2]} genannt,* ... *eine spezielle Software, die gewöhnlich durch die Firmware eines Rechners von einem startfähigen Medium geladen und anschließend ausgeführt wird"*
6. Wenn indessen der Aktivierungsbefehl von Server 1 bis zum nächsten Re-Boot der Geräte nicht erhalten wird, ersetzt der Boot-Loader jedes Geräts 5, 5', 5", das den Aktivierungsbefehl nicht erhalten hat, das Firmware-Update im internen Speicher der Mikroprozessoren 7 der Geräte 5, 5', 5" mit der sogenannten Golden Copy der Firmware, also einer gesichert abgespeicherten und geprüft lauffähigen und kompatiblen Version der Firmware.
   Die Verwendung der Timeout-Zeitdauer ist im vorliegenden Fall von besonderer Bedeutung, da es sich ggf. um ein Firmware-Update einer gesamten Installation handelt, bei dem die Abwärtskompatibilität unterbrochen werden kann.
   Durch die vorgegebene Timeout-Zeitdauer kann somit eine Synchronisierung der verschiedenen Geräte bei dem Firmware-Update Prozess erfolgen. Somit kann auch bei einem relativ unzuverlässigen Medium wie einem Mesh-Network ein zuverlässiger Firmware-Update Prozess erreicht werden.

Gemäß der Erfindung erfolgt somit ein Verfahren zum Firmware-Update-Over-The-Air (FOTA) von Gebäudetechnik-, insbesondere Lichttechnik-Installationen, mit mehreren Geräten (5, 5', 5"), die als vermaschtes Netz (2) mit einem Server (1) verbunden sind, wobei das Verfahren die folgenden Schritte aufweist:
- Abspeichern eines von dem Server (1) gesendeten Firmware-Update Images in jeweils einem externen Speicher (6) eines jeden Geräts,
- Auslösen des Kopierens des Firmware-Updates von dem externen Speicher (6) in einen internen Speicher (7) eines Mikrocontrollern eines jeden der Geräte (5, 5', 5") durch einen von dem Server (1) ausgegebenen Trigger-Befehl, wobei der Server innerhalb einer vorbestimmten Zeitdauer (*Timeout*) nach der Ausgabe des Trigger-Befehl anhand von Rückmeldungen der Geräte (5, 5', 5") überprüft, ob jedes Gerät (5, 5', 5") das Firmware-Update Image und den Trigger-Befehl von dem Server (1) erhalten hat, und wobei das Kopieren erst nach Ablauf der vorbestimmten Zeitdauer erfolgt.

Es kann dabei der Server (1) dazu ausgelegt sein, zu überprüfen, ob alle Geräte (5, 5', 5") innerhalb einer weiteren vorgegeben Zeitdauer mit dem Firmware-Update booten können, indem jedes Gerät (5, 5', 5") sich nach einem Booten mit dem Firmware-Update mit dem Server (1) verbindet.

Ein jedes Gerät (5, 5', 5"), das sich nach dem Firmware-Update mit dem Server(1) verbunden hat, kann auf einen Aktivierungsbefehl für die zukünftige Benutzung der Firmware durch einen Boot-Loader des Geräts (5, 5', 5") warten. Ein Gerät (5, 5', 5"), das keinen Aktivierungsbefehl erhält, kann das Firmware-Update im internen Speicher durch eine Golden Copy der Firmware ersetzen.

Wenn hinsichtlich zumindest eines Geräts die Überprüfung negativ ausfällt, wird innerhalb der vorbestimmten Zeitdauer (*Timeout*) das Firmware-Update-Over-The-Air durch den Server abgebrochen.

Die Erfindung betrifft auch ein System zum Firmware-Update-Over-The Air von Gebäudetechnik-, insbesondere Lichttechnik-Installationen, aufweisend eine Server und ein Gerät, die jeweils zur Unterstützung eines Verfahrens nach einem der vorhergehenden Ansprüche ausgelegt sind.

Somit wird auch ein Gebäudetechnik-, insbesondere Lichttechnik-Gerät wie bspw. ein Betriebsgerät für Leuchtmittel ermöglicht, das zur Unterstützung eines erfindungsgemäßen Verfahrens ausgelegt ist.

## Patentansprüche

1. Verfahren zum Firmware-Update-Over-The-Air, FOTA, von Gebäudetechnik-, insbesondere Lichttechnik-Installationen, mit mehreren Geräten (5, 5', 5"), die als vermaschtes Netz (2) mit einem Server (1) verbunden sind,
wobei das Verfahren die folgenden Schritte aufweist:
- Abspeichern eines von dem Server (1) gesendeten Firmware-Update Images in jeweils einem externen Speicher (6) eines jeden Geräts,
- Auslösen des Kopierens des Firmware-Updates von dem externen Speicher (6) in einen internen Speicher (7) eines Mikrocontrollers eines jeden der Geräte (5, 5', 5") durch einen von dem Server (1) ausgegebenen Trigger-Befehl,
wobei der Server innerhalb einer vorbestimmten Zeitdauer nach der Ausgabe des Trigger-Befehls anhand von Rückmeldungen der Geräte (5, 5', 5") überprüft, ob jedes Gerät (5, 5', 5") das Firmware-Update Image und den Trigger-Befehl von dem Server (1) erhalten hat,
wobei das Kopieren erst nach Ablauf der vorbestimmten Zeitdauer erfolgt, und wobei, wenn hinsichtlich zumindest eines Geräts die Überprüfung negativ ausfällt, innerhalb der vorbestimmten Zeitdauer das Firmware-Update-Over-The-Air durch den Server abgebrochen wird.

2. Verfahren nach Anspruch 1,
wobei der Server (1) überprüft, ob alle Geräte (5, 5', 5") innerhalb einer weiteren vorgegeben Zeitdauer mit dem Firmware-Update booten können, indem jedes Gerät (5, 5', 5") sich nach einem Booten mit dem Firmware-Update mit dem Server (1) verbindet.

3. Verfahren nach Anspruch 2,
bei dem ein jedes Gerät (5, 5', 5"), das sich nach dem Firmware-Update mit dem Server (1) verbunden hat, auf einen Aktivierungsbefehl für die zukünftige Benutzung der Firmware durch einen Boot-Loader des Geräts (5, 5', 5") wartet.

4. Verfahren nach Anspruch 3,
bei dem ein Gerät (5, 5', 5"), das keinen Aktivierungsbefehl erhält, das Firmware-Update im internen Speicher durch eine Golden Copy der Firmware ersetzt.

5. System zum Firmware-Update-Over-The-Air von Gebäudetechnik-, insbesondere Lichttechnik-Installationen, aufweisend einen Server und ein Gerät, die jeweils zur Unterstützung eines Verfahrens nach einem der vorhergehenden Ansprüche ausgelegt sind.

6. Gebäudetechnik-, insbesondere Lichttechnik-Gerät wie bspw. ein Betriebsgerät für Leuchtmittel, das zur Unterstützung eines Verfahrens nach einem der Ansprüche 1 bis 4 ausgelegt ist.

## Claims

1. Firmware over-the-air (FOTA) method for updating building technology,
in particular lighting technology installations, comprising multiple devices (5, 5", 5") which are connected to a server (1) as a meshed network (2), wherein the method comprises the following steps:
- storing a firmware update image sent by the server (1) in an external memory (6) of each device; and
- triggering the copying of the firmware update from the external memory (6) to an internal memory (7) of a microcontroller of each of the devices (5, 5', 5") by means of a trigger command issued by the server (1), wherein, within a predefined time period after the trigger command is issued, the server uses feedback from the devices (5, 5', 5") to check whether each device (5, 5', 5") has received the firmware update image and the trigger command from the server (1), and wherein the copying does not take place until after the predefined time period has elapsed, and wherein, if the check is negative with respect to at least one device, the firmware over-the-air update is aborted by the server within the predefined time period.

2. Method according to claim 1,
wherein the server (1) checks whether all devices (5, 5', 5") can boot with the firmware update within a further predefined time period by each device (5, 5', 5") connecting to the server (1) after booting with the firmware update.

3. Method according to claim 2,
wherein each device (5, 5', 5") that has connected to the server (1) after the firmware update waits for an activation command for future use of the firmware by a boot loader of the device (5, 5', 5").

4. Method according to claim 3,
wherein a device (5, 5", 5") that does not receive an activation command replaces the firmware update in the internal memory with a golden copy of the firmware.

5. System for firmware over-the-air (FOTA) updating of building technology,
in particular lighting technology installations, comprising a server and a device, each of which is designed to support a method according to any of the preceding claims.

6. Building technology device, in particular lighting technology device, such as, for example, an operating device for lighting means, which is designed to support a method according to any of claims 1 to 4.

## Revendications

1. Procédé permettant la mise à jour par voie hertzienne d'un micrologiciel, FOTA, dans des installations techniques du bâtiment,
en particulier des installations techniques d'éclairage, comportant plusieurs appareils (5, 5', 5") connectés en réseau maillé (2) à un serveur (1), le procédé présentant les étapes suivantes :
- stockage d'une image de mise à jour de micrologiciel envoyée par le serveur (1) dans respectivement une mémoire externe (6) de chaque appareil,
- déclenchement de la copie de la mise à jour de micrologiciel depuis la mémoire externe (6) dans une mémoire interne (7) d'un microcontrôleur de chacun des appareils (5, 5', 5") par une commande de déclenchement émise par le serveur (1), le serveur vérifiant, dans un délai prédéterminé après l'émission de la commande de déclenchement, sur la base de messages de retour des appareils (5, 5', 5"), si chaque appareil (5, 5', 5") a obtenu l'image de mise à jour de micrologiciel et la commande de déclenchement en provenance du serveur (1), la copie n'étant effectuée qu'après l'expiration du délai prédéterminé, et, si la vérification est négative en ce qui concerne au moins un appareil, la mise à jour par voie hertzienne d'un micrologiciel est interrompue par le serveur dans le délai prédéterminé.

2. Procédé selon la revendication 1,
le serveur (1) vérifiant si tous les appareils (5, 5', 5") peuvent démarrer avec la mise à jour de micrologiciel dans un délai prédéterminé supplémentaire par le fait que chaque appareil (5, 5', 5") se connecte au serveur (1) après le démarrage avec la mise à jour de micrologiciel.

3. Procédé selon la revendication 2,
chaque appareil (5, 5', 5") qui s'est connecté au serveur (1) après la mise à jour de micrologiciel attendant une commande d'activation pour l'utilisation future du micrologiciel par un chargeur de démarrage de l'appareil (5, 5', 5").

4. Procédé selon la revendication 3,
un appareil (5, 5', 5") qui n'obtient pas de commande d'activation remplaçant la mise à jour de micrologiciel dans la mémoire interne par une copie validée du micrologiciel.

5. Système permettant la mise à jour par voie hertzienne d'un micrologiciel d'installations techniques du bâtiment,
en particulier d'installations techniques d'éclairage, présentant un serveur et un appareil, lesquels sont respectivement configurés pour assister un procédé selon l'une des revendications précédentes.

6. Appareil technique du bâtiment, en particulier appareil technique d'éclairage, tel que par exemple un appareil de fonctionnement pour un moyen d'éclairage, lequel appareil de fonctionnement est configuré pour assister un procédé selon l'une des revendications 1 à 4.
